# EUROPEAN PATENT SPECIFICATION

(11) **EP 3 862 396 B1**
(45) Date of publication and mention of the grant of the patent: **03.12.2025**
(21) Application number: 21155354.0
(22) Date of filing: 05.02.2021
(51) Int. Cl.: C09D 5/08, B05D 7/00, C09D 163/00, C08G 59/50, C08F 222/10

(54) **PRIMER COMPOSITIONS AND METHODS OF COATING A SUBSTRATE**
GRUNDIERUNGSZUSAMMENSETZUNGEN UND VERFAHREN ZUR BESCHICHTUNG EINES SUBSTRATS
COMPOSITIONS D'APPRÊT ET PROCÉDÉS DE REVÊTEMENT D'UN SUBSTRAT

(30) Priority: 10.02.2020 US 202062972170 P; 25.01.2021 US 202117157700
(43) Date of publication of application: 11.08.2021
(73) Proprietor: Axalta Coating Systems, Philadelphia 19103 (US); Axalta Coating Systems GmbH, 4057 Basel (CH)
(72) Inventor: Iqbal, Danish, Philadelphia, PA 19103 (US)
(74) Representative: Ingrassia, Fisher & Lorenz UK Ltd.

(56) References cited:
- EP-A1- 3 085 748
- US-A- 4 051 195

## Description

### TECHNICAL FIELD

The present disclosure generally relates to primer compositions, methods of producing the same, and methods of coating a substrate, and more particularly relates to primer compositions that provide good corrosion protection and that may be covered with one or more top coats using a wet-on-wet process, and methods of coating a substrate with the same.

### BACKGROUND

Manufacturers typically paint motor vehicles during the manufacturing process to increase the life and durability of coated components, as well as provide an attractive appearance. The coating process often includes applying a primer composition overlying a substrate to form a primer coat, and then a top coat is applied overlying the primer coat. A clear coat may optionally be applied overlying the top coat. A wet-on-wet application process involves applying the primer composition to form the primer coat, and then applying one or more top coats (and/or clear coats) overlying the primer coat prior to curing the primer coat. The top coat is typically applied within about 10 or 15 minutes after the primer coat has been applied. The primer coat and the top coat are then simultaneously cured. The wet-on-wet application process saves time as compared to curing the primer coat prior to application of the top coat, and also eliminates the space and equipment that would be needed to separately store and cure the substrate during the curing of the primer coat prior to application of the top coat.

Automobile manufactures and others often desire a primer coat that provides effective protection from corrosion. The top coat provides some protection, but the primer coat is generally relied on for the most effective corrosion protection. Each coat also needs to have adequate adhesion to maintain contact with the underlying layer or substrate. Polyurethane and polyester primer compositions that perform well in wet-on-wet applications are available, but these primer compositions do not provide good corrosion protection. Epoxy primer compositions are available that provide good corrosion protection, but these epoxy primer compositions do not perform well in wet-on-wet applications, because the appearance of the final coating suffers due to slow curing of the epoxy-based primer coat. Solvent entrapment in the epoxy primer coat further limits the strength of the primer coat, and results in slippage of the total coating.

Accordingly, it is desirable to provide a primer composition for wet-on-wet application techniques, where the primer composition cures rapidly and also provides good corrosion protection and adhesion. In addition, it is desirable to provide a primer composition for wet-on-wet application techniques having solvents that quickly evaporate after application such that the cured primer coat is not softened due to solvent entrapment, and where the primer coat provides good corrosion protection and adhesion. Furthermore, other desirable features and characteristics of the present embodiment will become apparent from the subsequent detailed description and the appended claims, taken in conjunction with the accompanying drawing and this background.

EP3085748 relates to a fast curing anti-corrosive system. US4051195 relates to synthetic resins obtained by the reaction of compounds containing more than one epoxy group with curing agents.

### BRIEF SUMMARY

Primer compositions and methods of using the same are provided. In an exemplary embodiment, a primer composition includes an epoxy resin with a plurality of epoxy moieties. The primer composition also includes A (meth)acrylic resin with a plurality of (meth)acrylic moieties covalently bonded to an organic moiety. A crosslinking component is also present in the primer composition, where the crosslinking component is an amine.

In another exemplary embodiment, a method of coating a substrate is provided. The method includes applying a primer composition on to the substrate to form a primer coat, where the primer composition includes an epoxy resin, a (meth)acrylic resin, and a crosslinking component. The epoxy resin includes a plurality of epoxy moieties, the (meth)acrylic resin includes a plurality of (meth)acrylic moieties, and the crosslinking component includes an amine. A top coat is applied overlying the primer coat prior to curing the primer coat, and the primer coat and top coat are simultaneously cured to form a cured prime coat and a cured top coat.

A primer composition is provided in another embodiment. The primer composition includes a first portion with an epoxy resin and a solvent, where the epoxy resin includes a plurality of epoxy moieties. The solvent includes two or more of isobutyl alcohol, xylene, methoxy propanol, and butyl acetate. A second portion of the primer composition includes a crosslinking component that is a phenalkamine. A (meth)acrylic resin is present in a portion other than the second portion, where the (meth)acrylic resin includes three (meth)acrylic moieties covalently bonded to an organic moiety. The epoxy resin is present in the primer composition at from about 10 to about 35 weight percent, based on a total solids weight of the primer composition. The (meth)acrylic resin is present at from about 1 to about 10 weight percent and the crosslinking component is present at from about 2 to about 10 weight percent, based on the total solids weight of the primer composition. The solvent is present at from about 10 to about 30 weight percent, based on a total weight of the primer composition.

### BRIEF DESCRIPTION OF THE DRAWINGS

The present embodiments will hereinafter be described in conjunction with the following drawing figures, wherein like numerals denote like elements, and wherein:
FIGS. 1-4 illustrated formulas of embodiments of a (meth)acrylic resin; and
FIG. 5 illustrates a formula for a crosslinking agent.

### DETAILED DESCRIPTION

The following detailed description is merely exemplary in nature and is not intended to limit the application or uses of the embodiments described. Furthermore, there is no intention to be bound by any theory presented in the preceding technical field, background, brief summary, or the following detailed description.

Rapid coating of vehicle substrates improves cycle time and therefore lowers costs. The coating process can be shortened by utilizing wet-on-wet techniques, where a top coat is applied over a primer coat prior to the primer coat curing (i.e., when the primer coat is still "wet".") The top coat and primer coat may then be simultaneously cured. A clear coat may optionally be added over the top coat, and the primer coat, top coat, and clear coat can all be simultaneously cured. However, most coating components that cure rapidly enough for wet-on-wet application techniques tend to have poor corrosion inhibition properties. Furthermore, chemical moieties that increase corrosion protection tend to cure more slowly than moieties that hinder corrosion protection, so wet-on-wet application techniques tend to produce slippage, bubbles, or other flaws in the final coating.

One way of increasing the cure rate for epoxy coatings is to increase the quantity of catalyst, where the catalyst is a crosslinking compound. However, increasing the concentration of catalyst also tends to decrease the corrosion protection. Furthermore, catalysts with faster reaction times tend to have less corrosion protection that catalysts with slower reaction times.

It has been discovered that good wet-on-wet performance, combined with good corrosion protection, can be obtained using a primer composition with an epoxy resin combined with a multifunctional acrylic or methacrylic resin (including a resin with both acrylic and methacrylic moieties), especially when combined with a properly selected crosslinking agent and solvents. The best results are obtained by a combination of (1) epoxy resins; (2) acrylic or methacrylic resins (including resins with both acrylic and methacrylic moieties); (3) a fast curing crosslinking agent with appropriate moieties for corrosion protection such as a phenalkamine; and (4) a relatively volatile solvent system.

As used herein, a constituent that "includes" a compound includes that compound at from about 1 to about 100 weight percent, based on a total weight of the constituent, unless otherwise specified. Further, a constituent that "primarily includes" a compound includes that compound at from about 50 to about 100 weight percent, based on the total weight of the constituent.

The use of numerical values in the various ranges specified in this application, unless expressly indicated otherwise, are stated as approximations as though the minimum and maximum values within the stated ranges were both preceded by the word "about". Thus, slight variations above and below the stated ranges can be used to achieve substantially the same results as values within the ranges. Moreover, in the disclosure of these ranges, a continuous range is intended, covering every value between the minimum and maximum values, including the minimum and maximum end points of the range. In general, the term "about" means +/- 10% from the stated value.

The term "(meth)acrylic" as used here and hereinafter should be taken to mean methacrylic and/or acrylic. The term "acrylic" means an acrylic moiety without a methyl group on the vinyl group, and the term "methacrylic," without brackets around the prefix "meth," means a methacrylic moiety with a methyl group on the vinyl carbon that is directly bonded to the carbonyl carbon.

The term "two-pack coating composition", also known as 2K coating composition, refers to a coating composition having two packages that are stored in separate containers and sealed to increase the shelf life of the coating composition during storage. The two packages are mixed just prior to use to form a pot mix, which has a limited pot life, typically ranging from a few minutes (15 minutes to 45 minutes) to a few hours (4 hours to 8 hours), but other pot life time periods are also possible. The pot mix is then applied as a layer of a desired thickness on a substrate surface, such as an automobile body. After application, the layer dries and cures at ambient or at elevated temperatures to form a coating on the substrate surface having desired coating properties, such as, high gloss, mar-resistance and resistance to environmental damage.

In an exemplary embodiment, the primer composition as contemplated herein is provided as a 2K (2 pack) coating composition, but the primer composition may be provided in more than 2 packages in alternate embodiments. One of the 2 packages include an epoxy resin, and the other of the 2 packages includes a crosslinking agent, where the crosslinking agent is an amine. The epoxy resin may be present in the primer composition at from about 10 to about 35 weight percent in an exemplary embodiment, based on a total solids weight of the primer composition, where the "primer composition" includes all packages in a coating composition including 2 or more packages. However, in alternate embodiments, the epoxy resin may be present at from about 15 to about 30 weight percent, or from about 20 to about 25 weight percent, based on the total solids weight of the primer composition.

The term "solids," as used herein, refers to the non-volatile portions of the primer composition that remain after curing, and after the solvents have evaporated. In an exemplary embodiment, the primer composition is formulated such that the primer composition includes from about 50 to about 95 weight percent solids, or from about 70 to about 90 weight percent solids in an alternate embodiment. The remaining portion of the primer composition is solvents or other volatile components that evaporate or dissipate on curing. As such, a "total weight of the primer composition" is the total weight of all packages of the primer composition, including the weight of solvents or other materials that may later volatilize during the curing or drying process.

As noted above, the primer composition contemplated herein includes epoxy resins. Epoxy resin materials include an epoxy moiety, and may include two or more epoxy moieties. The epoxy moieties are covalently bonded to an organic moiety of the epoxy resin, and a wide variety of organic moieties may be utilized. Epoxy resins used in the primer composition contemplated herein may be prepared by a variety of processes including, for example, the condensation of a multi-hydroxy compound with epichlorohydrin. In an exemplary embodiment, the multi-hydroxy compound is a dihydroxy compound. Dihydroxy compounds useful for preparing the epoxy materials include, for example, diphenols and dihydric alcohols. Exemplary epoxy resins include, for example, materials derived from the condensation of Bisphenol A and/or Bisphenol F with epichlorohydrin. Epoxy materials may be prepared by reacting one equivalent of Bisphenol A and/or Bisphenol F with the desired number of equivalents of epichlorohydrin to produce a material with residual epoxy functionality (e.g., an epoxy resin).

Commercially available epoxy resins may include a mixture of different epoxy resins in some embodiments, but in other embodiments the epoxy resin is limited to one type of epoxy material. Epoxy materials that may be in the epoxy resin, either alone or in combination, include but are not limited to, diepoxides, monoepoxides, and aromatic polyethers that are free of epoxy groups. In some embodiments, the epoxy resin includes epoxy materials having an epoxy equivalent weight (EEW) of at most 1500.

Exemplary epoxy materials include, but are not limited to: glycidyl end-capped poly(Bisphenol A-co-epichlorohydrin); glycidyl end-capped poly(Bisphenol F-co-epichlorohydrin); glycidyl end-capped poly(Bisphenol F-co-epichlorohydrin)-co-(Bisphenol A-co-epichlorohydrin); a poly(alkylene glycol) diglycidyl ether such as poly(ethylene glycol) diglycidyl ether or poly(propylene glycol) diglycidyl ether; poly(tetrahydrofuran) diglycidyl ether; other materials with one, two, or more epoxy moieties; and combinations thereof.

The primer composition contemplated herein also includes a multi-functional (meth)acrylic resin. The (meth)acrylic resin includes an organic moiety with two or more (meth)acrylic moieties covalently bonded to the organic moiety. In an exemplary embodiment, the two or more (meth)acrylic moieties are linked to the organic moiety with an ester linkage. The (meth)acrylic resin includes three (meth)acrylic moieties in an exemplary embodiment, but the (meth)acrylic resin may include two (meth)acrylic moieties, four (meth)acrylic moieties, or more than four (meth)acrylic moieties in alternate embodiments. The (meth)acrylic resin is present in the primer composition at from about 1 to about 10 weight percent in an exemplary embodiment, based on the solids weight of the primer composition. However, in alternate embodiments the (meth)acrylic resin is present at from about 2 to about 8 weight percent, or from about 2 to about 6 weight percent, based on the solids weight of the primer composition. The (meth)acrylic resin is present in the primer composition at a lower concentration than the epoxy resin.

The (meth)acrylic resin may include a combination of acrylic moiety(ies) and methacrylic moiety(ies) in some embodiments, but in alternate embodiments the (meth)acrylic resin may only include acrylic moieties, or the (meth)acrylic resin may only include methacrylic moieties. The (meth)acrylic resin may have a molecular weight in the range of from about 200 to about 500 grams per mole in some embodiments, but other molecular weights are also possible.

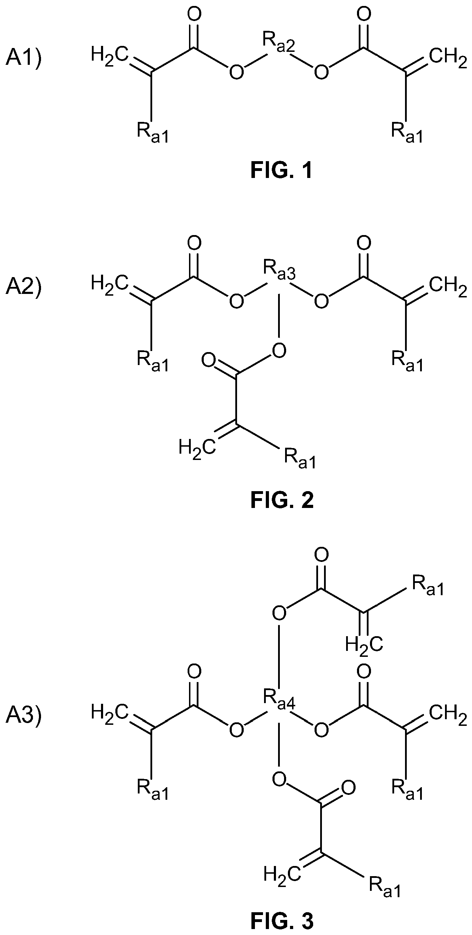

The (meth)acrylic resin may be represented by one or more of formulas A1), A2), A3), and/or A4) in some embodiments, as illustrated in FIGS. 1-4. In formulas A1), A2), A3,) and A4), Rₐ₁ is, independently from each other, a hydrogen or a methyl group, and Rₐ₂, Rₐ₃, Rₐ₄, and Rₐ₅ are organic moieties having from 1 to about 100 carbon atoms in an exemplary embodiment, where the ester linkage to the Rₐ₂, Rₐ₃, Rₐ₄, and/or Rₐ₅ may or may not be to the same carbon atom of the Rₐ₂, Rₐ₃, Rₐ₄, and/or Rₐ₅ organic moiety of the (meth)acrylic resin. So, for formula A1), the two ester linkages of the (meth)acrylic moieties may or may not be covalently bonded to the same carbon of the organic moiety of the (meth)acrylic resin (Rₐ₂), with the same being true for formulas A2), A3), and A4). In an exemplary embodiment, Rₐ₂, Rₐ₃, Rₐ₄, and/or Rₐ₅ are alkyl groups, where the alkyl groups may be either branched or straight. However, in alternate embodiments Rₐ₂, Rₐ₃, Rₐ₄, and Rₐ₅ may include aromatic moieties, and in still other embodiments Rₐ₂, Rₐ₃, Rₐ₄, and Rₐ₅ include carbon and hydrogen, and may include one or more of the elements nitrogen (N), oxygen (O), silicon (Si), sulfur (S) phosphorus (P), chlorine (Cl), or fluorine (F). Formulas A1), A2), A3), and A4) all represent a (meth)acrylic resin with an organic moiety (i.e., Rₐ₂, Rₐ₃, Rₐ₄, or Rₐ₅), and two or more (meth)acrylic moieties covalently bonded to the organic moiety. It is also possible for the (meth)acrylic resin to include more than 4 (meth)acrylic moieties covalently bonded to the organic moiety, so the number of (meth)acrylic moieties is not limited to 4, where embodiments with more than 4 (meth)acrylic moieties are not illustrated in the above figures. In an exemplary embodiment, the (meth)acrylic resin includes the structure indicated in formula A2) with 3 (meth)acrylic moieties covalently bonded to the organic moiety.

(Meth)acrylic resins are utilized in coatings and primers, but (meth)acrylic resins are typically used with ultraviolet (UV) initiation for polymerization, or as crosslinking agents in emulsion polymerization. Furthermore, (meth)acrylic resins are known to negatively influence corrosion resistance in coatings. The primer composition described herein includes an epoxy resin and undergoes condensation polymerization during the cure process. No UV curing is utilized or needed. In some embodiments, the (meth)acrylic resin and the epoxy resin are included in the same package or container, and the (meth)acrylic resin and epoxy resin are stable during extended storage at room temperature, where extended storage means one year or more. For example, the epoxy resin and the (meth)acrylic resin may both be present in a first package, and may both be absent from a second package. However, it is also possible for the epoxy resin and the (meth)acrylic resin to be provided in different packages in alternate embodiments. The use of the (meth)acrylic resin in combination with the epoxy resin results in more rapid curing while maintaining good corrosion protection, and the combination of these two different resins was not expected to provide the benefits described herein.

The primer composition also includes a crosslinking agent. The crosslinking agent enhances the crosslinking that occurs during the cure of the primer coat after being coated onto a substrate. In an exemplary embodiment, the crosslinking agent is present in the primer composition at from about 5 to about 13 weight percent, based on the solids weight of the primer composition. However, in alternate embodiments the crosslinking agent is present in the primer composition at from about 6 to about 12 weight percent, or at from about 8 to about 11 weight percent, based on the solids weight of the primer composition.

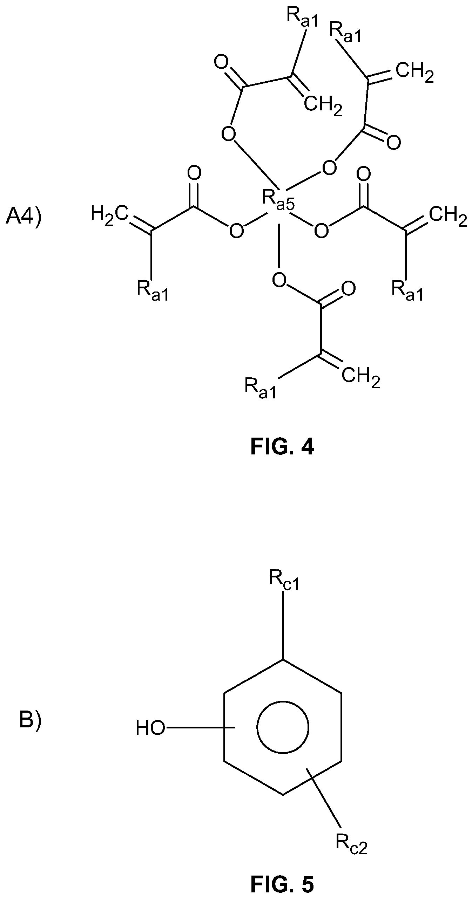

Crosslinking agents include materials that are capable of reacting with other functionalities present in the coating composition at the curing temperature. In an exemplary embodiment, the crosslinking agent comprises an amine with two or more amine functional groups. In some embodiments, the crosslinking agent is a phenalkamine, as indicated in formula B), illustrated in FIG. 5. In formula B) R_{c1} includes a plurality of amine functional groups located at the number 1 position of the aromatic group. The R_{c1} group comprises carbon (C), nitrogen (N), and hydrogen (H), and in an exemplary embodiment the R_{c1} group only includes the elements C, N, and H. The N atoms may be separated by 2 carbon atoms in the R_{c1} group, and there may be 2, 3, 4, or more N atoms. The R_{c1} group may include from 2 to about 50 carbon atoms, or from 3 to about 20 carbon atoms in different embodiments. The R_{c1} group may be straight or branched in different embodiments. However, in alternate embodiments the Rc1 group may include other elements besides C, H, and N, such as O, P, S, Si, Cl, or Fl.

The hydroxy group (OH) is positioned at one of the number 2, 3, 4, 5, or 6 positions of the aromatic group, and R_{c2} is an aliphatic group at the number 2, 3, 4, 5, or 6 position, where the aliphatic group R_{c2} and the hydroxy group (OH) are at different positions on the aromatic group. The aliphatic group R_{c2} includes from 5 to about 100 carbon atoms, or from about 10 to about 30 carbon atoms, or from about 12 to about 20 carbon atoms in various embodiments. The aliphatic group may include single bonds, double bonds, or triple bonds, and the aliphatic group may be branched or straight. The amine group R_{c1} provides reactive amine functional groups that aid in crosslinking, and the hydroxyl group aids in adhesion of the primer coat to the substrate. The aliphatic group R_{c2} improves water resistance and corrosion resistance. The use of a phenalkamine crosslinking agent provides rapid curing at moderate temperatures, which aids in wet-on-wet applications. The phenalkamine crosslinking agent also provides good chemical resistance, good surface appearance, and good moisture resistance. However, in alternate embodiments the primer composition includes other crosslinking agents, such as: amines other than phenalkamines; melamines; ketimines; dibutyl tin dilaurate and dibutyl tin diacetate; zinc salts; zirconium acetylacetonate; acids, blocked acids, or acid anhydrides; alcohols; mercaptans; other crosslinking agents; and combinations thereof.

The phenalkamine crosslinking agent, combined with the epoxy resin and the (meth)acrylic resin, provide for a rapid cure with good corrosion protection. The combination of the three different components provides superior performance than that observed for the combination of any two of these components. The use of a volatile solvent system further enhances the wet-on-wet performance of the primer composition. Not to be bound by theory, it is hypothesized that volatile solvents evaporate more quickly and therefore are less prone to become entrapped in the primer coat during the curing process.

The solvents are generally non-aqueous, where water is present in the primer composition at from about 0 to about 5 weight percent, based on a total weight of the primer composition (including solvents, not limited to solids). In some embodiments, the primer composition includes the solvents in an amount of from about 10 to about 40 weight percent, preferably about 10 to about 30 weight percent, based on a total weight of the primer composition. In an exemplary embodiment, the solvent system includes one or more "light solvents," where a "light solvent," as used herein, is a solvent having a vapor pressure of about 8 millimeters mercury (mm Hg) or more at 20 degrees Celsius (°C) and a boiling point of about 135 °C or less at 760 mm Hg of in an exemplary embodiment (1 mm Hg = 133.322 Pa). However, in alternate embodiments, the light solvents have a vapor pressure of about 8.5 mm Hg or more at 20 °C and boiling points of about 130 °C or less. Exemplary light solvents that may be used include isobutyl alcohol, methoxy propanol, butyl acetate, isobutyl alcohol, and methyl isobutyl alcohol, but many other light solvents may be utilized. In some embodiments, the solvent includes two or more of the light solvents. Preferably, the solvent comprises two or more of isobutyl alcohol, methoxy propanol, butyl acetate, and methyl isobutyl alcohol. Preferably still, the solvent comprises at least two of isobutyl alcohol, xylene, methoxy propanol, and butyl acetate, and wherein the solvent is present in the primer composition at from about 10 to about 30 weight percent, based on a total weight of the primer composition. The solvent may include heavy solvents, wherein a "heavy solvent," as used herein, is a solvent with a vapor pressure of more than about 8 mm Hg at 20 °C and a boiling point of less than about 135 °C at 760 mm HG. The solvents may include the light solvents in an amount of about 70 weight percent or more, in an exemplary embodiment, or about 80 weight percent or more in another embodiment, based on a total weight of the solvents. As such, the solvents may include less than about 30 weight percent heavy solvents, or less than about 20 weight percent heavy solvents, based on the total weight of the solvents. Small quantities of heavier solvents, such as xylene or other materials, may be included in the primer composition without significant deleterious effects on the performance of the primer composition. These heavier solvents may be included in some components that are utilized in formulating the primer composition.

In addition to components described above, the primer composition contemplated herein may contain additional components frequently used in coating compositions, such as pigments, fillers, surfactants, rheology agents, light protecting agents, and other additives. The pigments, fillers, surfactants, rheology agents, anti-foaming agents, wetting agents, drying agents, and other additives may be in quantities known to a person skilled in the art.

The primer composition may be applied using a wide variety of conventional techniques. In an exemplary embodiment, the epoxy resin and the (meth)acrylic resin are provided in a first package, and the crosslinking agent is provided in a second package. The solvents may be included in both packages, and additional solvents may be included in a third package. Additives or other components may be optionally included in any package. Additional packages may also be utilized in some embodiments. The contents of the two, three, or more packages are combined to form a pot mix, and the pot mix is applied to a substrate to form a primer coat. The primer coat may be applied to a primer thickness of about 20 microns or more in an exemplary embodiment, such as a primer thickness of from about 20 microns to about 150 microns. In some embodiments, the primer coat may have a primer thickness of about 100 microns or more, such as a primer thickness of from about 100 microns to about 150 microns. The primer coat is then flash dried for from about 10 to about 15 minutes at room temperatures, such as from about 10 to about 50 °C.

A top coat may be applied over the primer coat prior to the primer coat curing, but after the primer coat is flash dried. For example, the top coat may be applied within about 1 to about 15 minutes of the application of the primer coat, or from about 10 to about 15 minutes of the application of the primer coat in alternate exemplary embodiments. The top coat includes a pigment, and may include a wide variety of binders as well as other additives. The top coat may include a polyurethane binder in an exemplary embodiment. Alternatively, the top coat may include a polyester binder, or other binders or combinations of binders in various embodiments. The top coat may be applied to a top coat thickness of about 20 microns or more, such as from about 20 to about 100 microns, but in alternate embodiments the top coat may be applied to the top coat thickness of from about 30 to about 100 microns. The substrate with the primer coat and the top coat may then be simultaneously cured to form a cured primer and a cured top coat, such as by heating to a temperature of about 50 to about 150 °C for from about 10 to about 60 minutes, but other curing parameters may also be used. For example, the top coat and primer coat may be cured at ambient temperatures, such as from about 10 to about 30 °C, for from about 10 minutes to about 48 hours. The degree of cure is determined by the degree of crosslinking of the primer coat, the top coat, and/or the clear coat, where a crosslinking density of about 80% or more is defined as a complete cure in an exemplary embodiment. However, in alternate embodiments, the complete cure may be defined as a crosslinking density of about 90% or more, or 95% or more. The cured primer coat, top coat, and/or clear coat may have a high degree of corrosion resistance, such as a delamination of about 3 millimeters or less, as measured by the ASTM B 117 salt fog test for a test period of about 1000 hours.

An optional clear coat may be applied overlying the top coat, either before the curing process or after, in various embodiments. The clear coat may be applied to a clear coat thickness of about 20 microns or more, such as from about 20 microns to about 150 microns, but a clear coat thickness of from about 25 to about 130 microns is also possible in alternate embodiments. The primer thickness, top coat thickness, and clear coat thickness are determined by measuring the thickness of the layer after curing. If the clear coat is applied before the curing process, the top coat may be flash dried at ambient temperatures for from about 1 to about 15 minutes prior to application of the clear coat, or from about 10 to about 15 minutes from the top coat application in different exemplary embodiments. The primer coat, top coat, and clear coat may all be simultaneously cured in an exemplary embodiment, such as by heating to a temperature of about 50 to about 150 °C for from about 10 to about 60 minutes. Alternatively, the primer coat, top coat, and clear coat may all be simultaneously cured at ambient temperatures, such as from about 10 to about 30 °C, for from about 10 minutes to about 48 hours.

### EXPERIMENTAL

Several compositions were tested for wet-on-wet applications, and for corrosion protection. The tests indicate the addition of the (meth)acrylic resin improved performance, but the use of a phenalkamine crosslinking agent and light solvents as discussed above further improved performance. The balance and use of all three components (i.e., a (meth)acrylic resin, a phenalkamine crosslinking agent, and light solvents) with an epoxy resin produced a primer composition with rapid curing and solvent evaporation resulting in good appearance when used in wet-on-wet application techniques, as well as good corrosion protection. Corrosion protection was tested by ASTM B 117 and DIN EN ISO 6270-2 having 1,000 hours of exposure on steel, galvanized steel, and aluminum. Wet-on-wet performance was tested by DIN EN ISO 2409 (crosscut) and 423-0009 (Volvo adhesion test with knife technique) performing the test directly after the panels were taken out of the oven. The following test samples were prepared, where "S." means "Sample," and "Tol." means "tolerance." All values in Table 1 are provided in grams.

**TABLE 1**

| **TIPS code** | **Material** | **S. 1** | **S. 2** | **S. 3** | **S. 4** | **S. 5** | **S. 6** | **S. 7** | **S. 8** | **Tol.** |
|---|---|---|---|---|---|---|---|---|---|---|
| **G-36361** | Epoxy resin¹⁾ | 22 | 22 | 22 | 22 | 22 | 22 | 22 | 22 | ± 10% |
| **VG-49064** | Hydroxyl functional vinyl resin ²⁾ | 6 | 6 | 6 | 6 | 6 | 6 | 6 | 6 | ± 10% |
| **G-850** | Melamine crosslinker | 1 | 1 | 1 | 1 | 1 | 1 | 1 | 1 | ± 5% |
| **KG-10679** | leveling additive (poly acrylate) | 0.26 | 0.26 | 0.26 | 0.26 | 0.26 | 0.26 | 0.26 | 0.26 | ± 5% |
| **H-610** | Physical drier³⁾ | 0.63 | 0.63 | 0.63 | 0.63 | 0.63 | 0.63 | 0.63 | 0.63 | ± 5% |
| **G-40407** | Rheology additive⁴⁾ | 0.24 | 0.24 | 0.24 | 0.24 | 0.24 | 0.24 | 0.24 | 0.24 | ± 5% |
| **W-6241** | Carbon black | 0.043 | 0.043 | 0.043 | 0.043 | 0.043 | 0.043 | 0.043 | 0.043 | ± 5% |
| **W-6617** | Iron oxide yellow pigment | 0.067 | 0.067 | 0.067 | 0.067 | 0.067 | 0.067 | 0.067 | 0.067 | ± 5% |
| **W-7026** | Corrosion inhibitor⁵⁾ | 5.7 | 5.7 | 5.7 | 5.7 | 5.7 | 5.7 | 5.7 | 5.7 | ± 10% |
| **W-14096** | Talc⁶⁾ | 15.34 | 15.34 | 15.34 | 15.34 | 14.34 | 14.34 | 14.34 | 14.34 | ± 10% |
| **W-10096** | Barium sulphate⁷⁾ | 17 | 17 | 17 | 17 | 16 | 16 | 16 | 16 | ± 10% |
| **W-8035** | Titanium dioxide⁸⁾ | 16.9 | 16.9 | 16.9 | 16.9 | 15.9 | 15.9 | 15.9 | 15.9 | ± 10% |
| **H-18** | Iso butyl alcohol | 0 | 0 | 3.5 | 3.50 | 0 | 0 | 3.5 | 3.5 | ± 10% |
| **H-38584** | Solvesso^{®} 150 ND | 3.8 | 3.8 | 0 | 0 | 3.8 | 3.8 | 0 | 0 | ± 10% |
| **H-224** | Butyl Glycol | 5.5 | 5.5 | 0 | 0 | 5.5 | 5.5 | 0 | 0 | ± 10% |
| **H-323** | Methoxy propyl acetate | 1.65 | 1.65 | 0 | 0 | 1.65 | 1.65 | 0 | 0 | ± 10% |
| **H-583** | Xylene | 2.87 | 2.87 | 2.87 | 2.87 | 2.87 | 2.87 | 2.87 | 2.87 | ± 10% |
| **H-166** | Methoxy propanol | 0 | 0 | 5.45 | 5.45 | 0 | 0 | 5.45 | 5.45 | ± 10% |
| **H-6** | Butyl acetate | 1 | 1 | 3 | 3 | 1 | 1 | 3 | 3 | ± 10% |
| **D34** | Multi-functional (meth)acrylic resin⁹⁾ | 0 | 0 | 0 | 0 | 3 | 3 | 3 | 3 | ± 10% |
| Activator | Phenalkamine activator | 8.5 | 12.5 | 8.5 | 12.5 | 8.5 | 12.5 | 8.5 | 12.5 | ± 10% |
| Composition of the activeator | Phenalkamine¹⁰⁾ | 60 | 60 | 60 | 60 | 60 | 60 | 60 | 60 | ± 10% |
| | Butyl alcohol | 20 | 20 | 20 | 20 | 20 | 20 | 20 | 20 | ± 10% |
| | Xylene | 16 | 16 | 16 | 16 | 16 | 16 | 16 | 16 | ± 10% |
| | Amcamine^{®} K54¹¹⁾ | 4 | 4 | 4 | 4 | 4 | 4 | 4 | 4 | ± 10% |
| Thinner | Epoxy thinner | 15 | 15 | 15 | 15 | 15 | 15 | 15 | 15 | ± 10% |
| Composition of | Iso butyl alcohol | 10 | 10 | 10 | 10 | 10 | 10 | 10 | 10 | ± 10% |
| the epoxy thinner | Methyl isobutyl alcohol | 15 | 15 | 15 | 15 | 15 | 15 | 15 | 15 | ± 10% |
| | Methoxy propanol | 50 | 50 | 50 | 50 | 50 | 50 | 50 | 50 | ± 10% |
| | Xylene | 6.9 | 6.9 | 6.9 | 6.9 | 6.9 | 6.9 | 6.9 | 6.9 | ± 10% |
| | Butyl acetate | 10.1 | 10.1 | 10.1 | 10.1 | 10.1 | 10.1 | 10.1 | 10.1 | ± 10% |

| | | | | | | | | | | |
|---|---|---|---|---|---|---|---|---|---|---|
| 1) The epoxy resin utilized was glycidyl end-capped poly (Bisphenol A-co-epichlorohydrin) 2) Hydroxyl functional vinyl resin available from Wuxi Honghui resin co. LTD 3) Physical drier based on metal salts of synthetic carboxylic acids supplied by Brochers 4) Rheology additive based on modified urea, available from BYK 5) Heucopos^{®} ZPA (corrosion inhibitor) 6) Talc used was Talc CM1P, available from IMI Fabi 7) Barium sulphate was used as an extender (Alba white 70) and is available from Deutsche Baryt Industrie 8) Titanium dioxide (Ti Pure^{™} R-902+) 9) Tri functional (meth)acrylic resin (Photomer^{®} 4006) and is supplied by IGM resins 10) Phenalkamine supplied by Cardolite 11) Catalyst (Ancamie^{®} K54) available from Evonik | | | | | | | | | | |

The samples are prepared to illustrate the combination of the epoxy and (meth)acrylic resin with a properly selected crosslinker and solvent system, where all samples include the epoxy resin. Samples 1 and 2 provide a baseline reference, where Sample 2 has a higher concentration of activator. Samples 3 and 4 include an optimized solvent system with an increased concentration of light solvents and a decreased concentration of heavy solvents, but without a (meth)acrylic resin, and with Sample 4 having a higher concentration of activator. Samples 5 and 6 include the (meth)acrylic resin, but without the optimized solvent system, again with Sample 6 having a higher concentration of activator. Finally, Samples 7 and 8 include the (meth)acrylic resin with the epoxy resin and with the optimized solvent system, where Sample 8 includes a higher concentration of activator.

The following table illustrates the test results indicating wet-on-wet performance and corrosion performance.

**TABLE 2**

| **Substrate** | **Sample #** | **DIN EN ISO 2409^{a)} (crosscut)** | **423-00009^{b)} (Volvo scratch test)** | **ASTM B 117^{c)} (corrosion, mm)** | **DIN EN ISO 4628-2^{c)} (Blistering)** |
|---|---|---|---|---|---|
| Steel | 1 | GT 0-1 | 2-3 | 2 | 0S0 |
| | 2 | GT 0-1 | 2-3 | 2.4 | 0S0 |
| | 3 | GT 0-1 | 2 | 1.9 | 0S0 |
| | 4 | GT 0-1 | 2 | 2.3 | 0S0 |
| | 5 | GT 0-1 | 2 | 2 | 0S0 |
| | 6 | GT 0-1 | 2 | 2.5 | 2S2 |
| | 7 | GT 0-1 | 0 | 2.2 | 0S0 |
| | 8 | GT 0-1 | 0 | 2.4 | 0S0 |
| Galvanized Steel | 1 | GT 1 | 2-3 | 3.3 | 0S0 |
| | 2 | GT 1 | 2-3 | 3.4 | 0S0 |
| | 3 | GT 1 | 2 | 2.9 | 0S0 |
| | 4 | GT 1 | 2 | 3 | 0S0 |
| | 5 | GT 1 | 2 | 2.8 | 0S0 |
| | 6 | GT 1 | 2 | 3.3 | 2S2 |
| | 7 | GT 1 | 0 | 2.8 | 0S0 |
| | 8 | GT 1 | 0 | 3.1 | 0S0 |
| Aluminum | 1 | GT 0-1 | 2-3 | 0.7 | 0S0 |
| | 2 | GT 0-1 | 2.3 | 1 | 0S0 |
| | 3 | GT 0-1 | 2 | 0.85 | 0S0 |
| | 4 | GT 0-1 | 2 | 0.9 | 0S0 |
| | 5 | GT 0-1 | 2 | 0.7 | 0S0 |
| | 6 | GT 0-1 | 2 | 0.8 | 0S0 |
| | 7 | GT 0-1 | 0 | 0.9 | 0S0 |
| | 8 | GT 0-1 | 0 | 1 | 0S0 |

| | | | | | |
|---|---|---|---|---|---|
| a) GT0: means edges are completely smooth and none of the squares in the lattices are detached, GT5: means complete de-adhesion in multiple squares in the lattices. b) 0: very good adhesion, no paint can be removed, 3: very poor adhesion, paint flakes. c) Results indicate millimeters of corrosion, where lower values indicate less corrosion and higher values indicate greater corrosion. d) 0S0: No blistering, 5S5, blistering all over the surface. | | | | | |

The best corrosion results are seen with Sample 7. Exemplary epoxy resins and (meth)acrylic resins were combined and tested for compatibility. Ideally, the epoxy resins and the (meth)acrylic resins described above would be provided in a single package (such as a first package), with the crosslinking agent provided in a separate package (such as a second package). A solvent thinner may be provided in another different package (such as a third package). It was anticipated that the epoxy resins and (meth)acrylic resins would not be stable for long terms, because the double bonds of the (meth)acrylic resin were expected to react with the reactive epoxy moieties. However, testing indicated the resins were compatible for long term storage (a year or more.) Compatibility was determined because all samples showed minimal change in viscosity, minimal change in the epoxy equivalent weight (EEW) value, and the primer was easily mixed, even after the extended storage periods.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the application in any way. Rather, the foregoing detailed description will provide those skilled in the art with a convenient road map for implementing one or more embodiments, it being understood that various changes may be made in the function and arrangement of elements described in an exemplary embodiment without departing from the scope, as set forth in the appended claims.

## Claims

1. A primer composition comprising, based on a total solids weight of the primer composition:
a) 10 to 35 wt.% of an epoxy resin, wherein the epoxy resin comprises a plurality of epoxy moieties;
b) 1 to 10 wt.% of a (meth)acrylic resin,; and
c) 5 to 13 wt.% of a crosslinking component comprising an amine,
wherein the (meth)acrylic resin is represented by one or more of formulas A1), A2), A3), and/or A4): 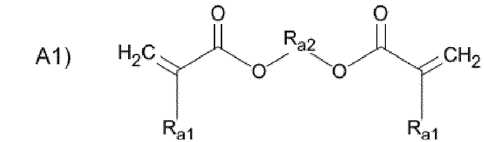 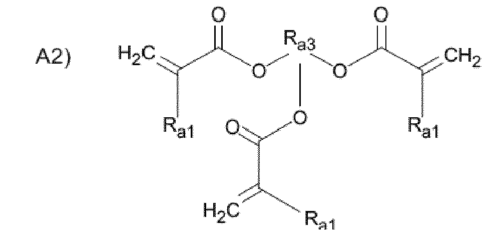 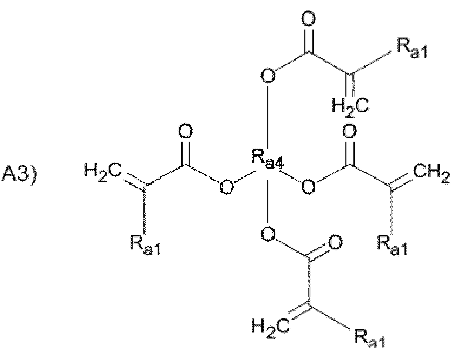 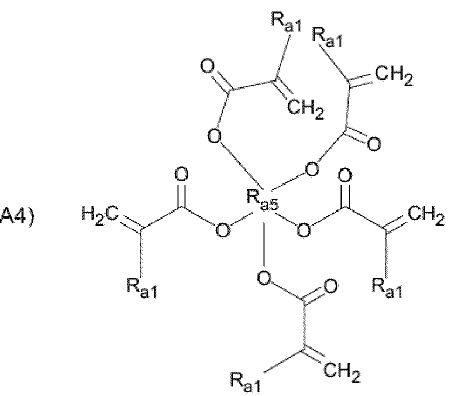 wherein Rₐ₁ is, independently from each other, a hydrogen or a methyl group, and Rₐ₂, Rₐ₃, Rₐ₄, and Rₐ₅ are organic moieties having from 1 to about 100 carbon atoms, where the ester linkage to the Rₐ₂, Rₐ₃, Rₐ₄, and/or Rₐ₅ may or may not be to the same carbon atom of the Rₐ₂, Rₐ₃, Rₐ₄, and/or Rₐ₅ organic moiety of the (meth)acrylic resin.

2. The primer composition of claim 1, wherein:
a) the epoxy resin is provided in a first package;
b) the crosslinking component is provided in a second package; and
c) the (meth)acrylic resin is provided in a package other than the second package, preferably in the first package.

3. The primer composition of claims 1 or 2, wherein:
the (meth)acrylic resin is represented by formula A2).

4. The primer composition of any one of claims 1 to 3, further comprising:
a solvent present in the primer composition, optionally in the first package, at from about 10 to about 40 weight percent, based on a total weight of the primer composition, wherein the solvent comprises a light solvent, wherein the light solvent comprises about 70 weight percent or more of the solvent, based on a total weight of the solvent, the light solvent having a vapor pressure of about 8 millimeters mercury (mm Hg) or more at a temperature of 20 degrees Celsius and/or a boiling point of about 135 degrees Celsius or less at a pressure of 760 millimeters mercury (1 mm Hg = 133.322 Pa).

5. The primer composition of claim 4, wherein:
the solvent comprises two or more of isobutyl alcohol; ethoxy propanol; methoxy propanol; butyl acetate; hexyl acetate; methyl ethyl ketone; methyl propyl ketone; methyl amyl ketone; methyl isobutyl ketone; cyclohexane; aromatic compounds having from 6 to 10 carbon atoms (including but not limited to xylene); methyl acetate, acetone; and heptane.

6. The primer composition of any one of claims 1 to 5, wherein:
the crosslinking component comprises a phenalkamine.

7. A method of coating a substrate, the method comprising the steps of:
applying a primer composition according to any one of claims 1-6 on to the substrate to form a primer coat,;
applying a top coat overlying the primer coat prior to the curing of the primer coat; and
curing the primer coat and the top coat simultaneously to form a cured primer and a cured top coat, wherein curing the primer coat optionally does not comprise ultraviolet curing.

8. The method of claim 7 wherein:
applying the top coat comprises applying the top coat within from about 1 to about 15 minutes of applying the primer coat.

9. The method of claim 8, wherein:
curing the primer coat and the top coat comprises heating the primer coat and the top coat to from about 50 degrees Celsius to about 150 degrees Celsius for about 10 to about 60 minutes.

10. The method of any one of claims 7 to 9 wherein:
applying the primer composition comprises applying the primer composition to a primer thickness of about 20 microns or more;
applying the top coat comprises applying the top coat to a top coat thickness of about 20 microns or more; and
curing the primer coat and the top coat to a crosslinking density of about 80% or more.

11. The method of any one of claims 7 to 10 further comprising:
applying a clear coat overlying the top coat within from about 1 to about 15 minutes of applying the top coat; and
wherein curing the primer coat and the top coat further comprises simultaneously curing the clear coat.

12. The method of claim 11 wherein:
applying the primer composition comprises applying the primer composition to a primer thickness of about 20 microns or more;
applying the top coat comprises applying the top coat to a top coat thickness of about 20 microns or more;
applying the clear coat comprises applying the clear coat to a clear coat thickness of about 20 microns or more; and
curing the primer coat, the top coat, and the clear coat comprises curing the primer coat, the top coat, and the clear coat to a crosslinking densities of >80 %.

13. The method of any one of claims 7 to 12 wherein:
applying the primer composition comprises applying the primer composition wherein the primer composition comprises a solvent, and wherein the solvent has a vapor pressure of about 2 mm Hg at a temperature of about 25 degrees Celsius (1 mm Hg = 133.322 Pa).

## Patentansprüche

1. Grundierungszusammensetzung, umfassend, bezogen auf das
Gesamtfeststoffgewicht der Grundierung:
a) 10 bis 35 Gew.-% eines Epoxidharzes, wobei das Epoxidharz eine Vielzahl von Epoxidanteilen umfasst;
b) 1 bis 10 Gew.-% eines (Meth)acrylharzes; und
c) 5 bis 13 Gew.-% einer Vernetzungskomponente, die ein Amin enthält,
wobei das (Meth)acrylharz durch eine oder mehrere der Formeln Al), A2), A3) und/oder A4) dargestellt wird: 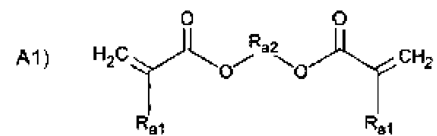 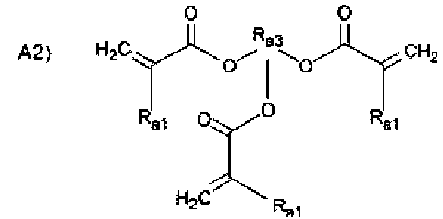 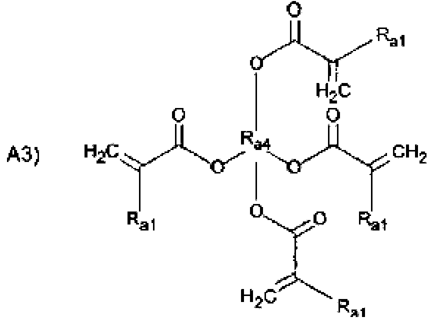 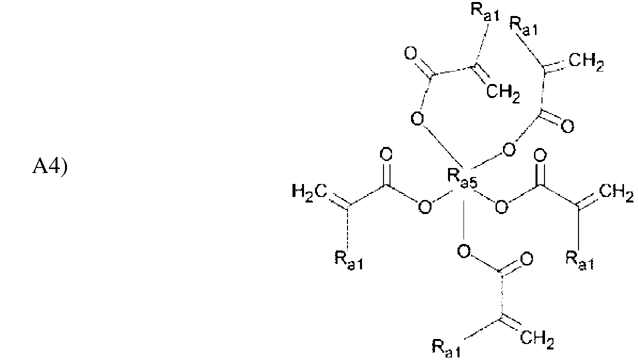 wobei Rₐ₁ unabhängig voneinander ein Wasserstoff oder eine Methylgruppe ist und Rₐ₂, Rₐ₃, Rₐ₄ und Rₐ₅ organische Anteile von 1 bis etwa 100 Kohlenstoffatomen haben wobei die Esterbindung an Rₐ₂, Rₐ₃, Rₐ₄ und/oder Rₐ₅ mit demselben Kohlenstoffatom des Ra₂ verbunden sein kann oder nicht, Rₐ₃, Rₐ₄, und/oder Rₐ₅ organische Anteile des (Meth)acrylharzes sind.

2. Grundierungszusammensetzung nach Anspruch 1, wobei:
a) das Epoxidharz in einer ersten Packung geliefert wird;
b) die Vernetzungskomponente in einer zweiten Packung geliefert wird; und
c) das (Meth)acrylharz in einer anderen Packung als der zweiten Packung, vorzugsweise in der ersten Packung, geliefert wird.

3. Grundierungszusammensetzung nach Anspruch 1 oder 2, wobei:
das (Meth)acrylharz durch die Formel A2) dargestellt ist.

4. Grundierungszusammensetzung nach einem der Ansprüche 1 bis 3, die ferner Folgendes umfasst:
ein Lösungsmittel, das in der Grundierungszusammensetzung, gegebenenfalls in der ersten Packung, zu etwa 10 bis etwa 40 Gewichtsprozent, bezogen auf das Gesamtgewicht der Grundierungszusammensetzung, vorhanden ist, wobei das Lösungsmittel ein leichtes Lösungsmittel umfasst, wobei das leichte Lösungsmittel etwa 70 Gewichtsprozent oder mehr des Lösungsmittels, bezogen auf das Gesamtgewicht des Lösungsmittels umfasst, wobei das leichte Lösungsmittel einen Dampfdruck von etwa 8 Millimeter Quecksilber (mmHg) oder mehr bei einer Temperatur von 20 Grad Celsius und/oder einen Siedepunkt von etwa 135 Grad Celsius oder weniger bei einem Druck von 760 Millimeter Quecksilber (1 mmHg = 133,322 Pa) hat.

5. Grundierungszusammensetzung nach Anspruch 4, wobei:
das Lösungsmittel zwei oder mehr der folgenden Stoffe umfasst: Isobutylalkohol, Ethoxypropanol, Methoxypropanol, Butylacetat, Hexylacetat, Methylethylketon, Methylpropylketon, Methylamylketon, Methylisobutylketon, Cyclohexan, aromatische Verbindungen mit 6 bis 10 Kohlenstoffatomen (einschließlich, aber nicht darauf beschränkt, Xylol), Methylacetat, Aceton und Heptan.

6. Grundierungszusammensetzung nach einem der Ansprüche 1 bis 5, wobei:
die Vernetzungskomponente ein Phenalkamin enthält.

7. Verfahren zum Beschichten eines Substrats, wobei das Verfahren die folgenden Schritte umfasst:
das Auftragen einer Grundierungszusammensetzung nach einem der Ansprüche 1 bis 6 auf das Substrat zur Bildung einer Grundierungsschicht;
das Auftragen einer Deckschicht über der Grundierungsschicht vor dem Aushärten der Grundierungsschicht; und
das gleichzeitige Aushärten der Grundierungsschicht und der Deckschicht, um eine ausgehärtete Grundierung und eine ausgehärtete Deckschicht zu bilden, wobei das Aushärten der Grundierungsschicht gegebenenfalls keine Ultraviolettaushärtung umfasst.

8. Verfahren nach Anspruch 7, wobei:
das Auftragen der Deckschicht das Auftragen der Deckschicht innerhalb von etwa 1 bis etwa 15 Minuten nach dem Auftragen der Grundierungsschicht umfasst.

9. Verfahren nach Anspruch 8, wobei:
das Aushärten der Grundierungsschicht und der Deckschicht durch Erhitzen der Grundierungsschicht und der Deckschicht auf etwa 50 Grad Celsius bis etwa 150 Grad Celsius für etwa 10 bis etwa 60 Minuten umfasst.

10. Verfahren nach einem der Ansprüche 7 bis 9, wobei:
das Auftragen der Grundierungszusammensetzung das Auftragen der Grundierungszusammensetzung bis zu einer Grundierungsdicke von etwa 20 Mikrometern oder mehr umfasst;
das Auftragen der Deckschicht das Auftragen der Deckschicht bis zu einer Deckschichtdicke von etwa 20 Mikrometern oder mehr umfasst; und
das Aushärten der Grundierung und des Decklacks bis zu einer Vernetzungsdichte von etwa 80 % oder mehr.

11. Verfahren nach einem der Ansprüche 7 bis 10, ferner umfassend:
das Auftragen eines Klarlacks über dem Decklack innerhalb von etwa 1 bis etwa 15 Minuten nach dem Auftragen des Decklacks; und
wobei das Aushärten der Grundierungsschicht und der Deckschicht ferner das gleichzeitige Aushärten der Klarlackschicht umfasst.

12. Verfahren nach Anspruch 11, wobei:
das Auftragen der Grundierungszusammensetzung das Auftragen der Grundierungszusammensetzung bis zu einer Grundierungsdicke von etwa 20 Mikrometern oder mehr umfasst;
das Auftragen der Deckschicht das Auftragen der Deckschicht mit einer Dicke von etwa 20 Mikrometern oder mehr umfasst;
das Aufbringen des Klarlacks das Aufbringen des Klarlacks mit einer Klarlackdicke von etwa 20 Mikrometern oder mehr umfasst; und
das Aushärten der Grundierungsschicht, der Deckschicht und der Klarlackschicht das Aushärten der Grundierungsschicht, der Deckschicht und der Klarlackschicht bis zu einer Vernetzungsdichte von >80 % umfasst.

13. Verfahren nach einem der Ansprüche 7 bis 12, wobei:
das Auftragen der Grundierungszusammensetzung das Auftragen der Grundierungszusammensetzung umfasst, wobei die Grundierungszusammensetzung ein Lösungsmittel umfasst und wobei das Lösungsmittel einen Dampfdruck von etwa 2 mmHg bei einer Temperatur von etwa 25 Grad Celsius (1 mmHg = 133,322 Pa) aufweist.

## Revendications

1. Une composition d'amorce comprenant, sur la base du poids total en matières solides de la
composition d'amorce :
a) de 10 à 35
% en poids d'une résine époxy, ladite résine époxy comprenant une pluralité de groupements époxy ;
b) 1 à 10 % en poids d'une résine (méth)acrylique ; et
c) 5 à 13 % en poids d'un composant de réticulation comprenant une amine,
dans laquelle la résine (méth)acrylique est représentée par une ou plusieurs des formules Al), A2), A3) et/ou A4) : 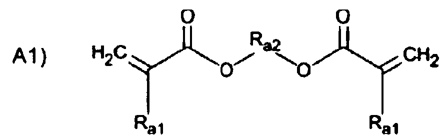 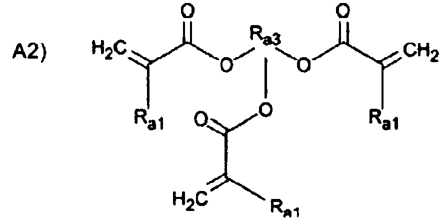 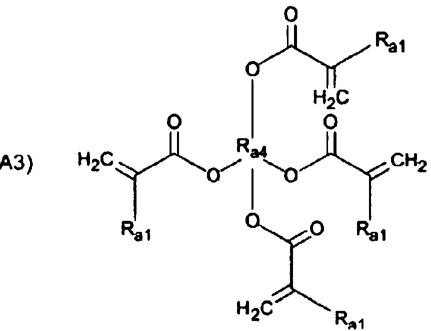 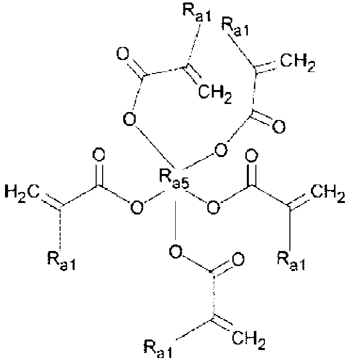 Dans laquelle Rₐi est, indépendamment l'un de l'autre, un atome d'hydrogène ou un groupement méthyle, et Rₐ₂, Rₐ₃, Rₐ₄ et Rₐs sont des groupements organiques comportant de 1 à environ 100 atomes de carbone, la liaison ester aux groupements Rₐ2, Rₐ3, Rₐ₄ et/ou Rₐs pouvant être ou ne pas être rattachée au même atome de carbone du groupement organique Ra2, Rₐ₃, Rₐ₄, et/ou Rₐs de la résine (méth)acrylique.

2. Composition d'amorce selon la revendication 1, dans laquelle :
a) la résine époxy est fournie dans un premier emballage ;
b) le composant de réticulation est fourni dans un deuxième emballage ; et
c) la résine (méth)acrylique est fournie dans un emballage autre que le deuxième emballage, de préférence dans le premier emballage.

3. Composition d'amorce selon la revendication 1 ou 2, dans laquelle :
la résine (méth)acrylique est représentée par la formule A2).

4. Composition d'amorce selon l'une quelconque des revendications 1 à 3, comprenant en outre :
Un solvant présent dans la composition d'amorce, éventuellement dans le premier conditionnement, en une proportion d'environ 10 à environ 40 % en poids, sur la base du poids total de la composition d'amorce, ledit solvant comprenant un solvant léger, ce solvant léger représentant environ 70 % en poids ou plus du solvant, sur la base du poids total dudit solvant, le solvant léger présentant une pression de vapeur d'environ 8 millimètres de mercure (mm Hg) ou plus à une température de 20 degrés Celsius et/ou un point d'ébullition d'environ 135 degrés Celsius ou moins à une pression de 760 millimètres de mercure (1 mm Hg = 133,322 Pa).

5. Composition d'amorce selon la revendication 4, dans laquelle :
le solvant comprend au moins deux éléments parmi l'alcool isobutylique ; l'éthoxypropanol ; le méthoxypropanol ; l'acétate de butyle ; l'acétate d'hexyle ; la méthyléthylcétone ; la méthypropylcétone ; la méthylamylcétone ; la méthylisobutylcétone ; le cyclohexane ; des composés aromatiques ayant de 6 à 10 atomes de carbone (y compris, mais sans s'y limiter, le xylène) ; l'acétate de méthyle, l'acétone ; et l'heptane.

6. Composition d'amorce selon l'une quelconque des revendications 1 à 5, dans laquelle :
le composant de réticulation comprend une phénalkamine.

7. Procédé de revêtement d'un substrat, le procédé comprenant les étapes de :
appliquer une composition d'amorce selon l'une quelconque des revendications 1 à 6 sur le substrat pour former une couche d'amorce, ;
appliquer une couche de finition recouvrant la couche d'amorce avant le durcissement de la couche d'amorce ; et
le durcissement simultané de la couche d'amorce et de la couche de finition pour former un amorce durci et une couche de finition durcie, le durcissement de la couche d'amorce ne comprenant éventuellement pas de durcissement aux ultraviolets.

8. Procédé selon la revendication 7, dans lequel :
l'application de la couche de finition comprend l'application de la couche de finition dans un délai d'environ 1 à environ 15 minutes après l'application de la couche d'amorce.

9. Procédé selon la revendication 8, dans lequel :
le durcissement de la couche d'amorce et de la couche de finition comprend le chauffage de la couche d'amorce et de la couche de finition à environ 50 degrés Celsius jusqu'à environ 150 degrés Celsius pendant environ 10 à environ 60 minutes.

10. Procédé selon l'une quelconque des revendications 7 à 9, dans lequel :
appliquer la composition d'amorce comprend appliquer la composition d'amorce sur une épaisseur d'amorce d'environ 20 microns ou plus ;
appliquer la couche de finition comprend appliquer la couche de finition sur une épaisseur de couche de finition d'environ 20 microns ou plus ; et
durcir la couche d'amorce et de la couche de finition à une densité de réticulation d'environ 80 % ou plus.

11. Procédé selon l'une quelconque des revendications 7 à 10, comprenant en outre :
appliquer une couche transparente recouvrant la couche de finition dans un délai d'environ 1 à environ 15 minutes après appliquer la couche de finition ; et
dans lequel durcir la couche d'amorce et de la couche de finition comprend en outre durcir simultanément la couche transparente.

12. Procédé selon la revendication 11, dans lequel :
appliquer la composition d'amorce comprend appliquer la composition d'amorce sur une épaisseur d'amorce d'environ 20 microns ou plus ;
appliquer la couche de finition comprend appliquer la couche de finition sur une épaisseur de couche de finition d'environ 20 microns ou plus ;
appliquer la couche transparente comprend appliquer la couche transparente sur une épaisseur de couche transparente d'environ 20 microns ou plus ; et
durcir la couche d'amorce, la couche de finition et la couche transparente comprend durcir la couche d'amorce, la couche de finition et la couche transparente à des densités de réticulation >80 %.

13. Procédé selon l'une quelconque des revendications 7 à 12, dans lequel :
appliquer la composition d'amorce comprend appliquer la composition de primaire dans laquelle la composition d'amorce comprend un solvant, et dans lequel le solvant a une pression de vapeur d'environ 2 mm Hg à une température d'environ 25 degrés Celsius (1 mm Hg = 133,322 Pa).
